(19) Europäisches Patentamt

European Patent Office

Office européen des brevets

(11) **EP 0 791 169 B1**

(12) **EUROPÄISCHE PATENTSCHRIFT**

(45) Veröffentlichungstag und Bekanntmachung des Hinweises auf die Patenterteilung:
**19.04.2000 Patentblatt 2000/16**

(21) Anmeldenummer: **95931181.2**

(22) Anmeldetag: **22.08.1995**

(51) Int Cl.[7]: **G01C 17/38**

(86) Internationale Anmeldenummer:
**PCT/EP95/03330**

(87) Internationale Veröffentlichungsnummer:
**WO 96/15424 (23.05.1996 Gazette 1996/23)**

(54) **VERFAHREN ZUR STABILISIERUNG DER RICHTUNGSANZEIGE VON MAGNETKOMPASSEN**

PROCESS FOR STABILISING THE DIRECTION INDICATED BY MAGNETIC COMPASSES

PROCEDE DE STABILISATION DE LA DIRECTION INDIQUEE PAR DES COMPAS MAGNETIQUES

(84) Benannte Vertragsstaaten:
**AT CH DE FR GB IT LI NL SE**

(30) Priorität: **09.11.1994 DE 4439945**

(43) Veröffentlichungstag der Anmeldung:
**27.08.1997 Patentblatt 1997/35**

(73) Patentinhaber: **Leica Geosystems AG**
**9435 Heerbrugg (CH)**

(72) Erfinder: **DITTRICH, Frank**
**CH-9445 Rebstein (CH)**

(74) Vertreter: **Stamer, Harald, Dipl,-Phys.**
**Postfach 26 04**
**35536 Wetzlar (DE)**

(56) Entgegenhaltungen:
**EP-A- 0 145 950          US-A- 5 297 063**

**Beschreibung**

Die Erfindung betrifft ein Verfahren zur Stabilisierung der Richtungsanzeige von Magnetkompassen.

In US 5,235,514 A ist ein Navigationssystem für ein Fahrzeug beschrieben. Komponenten dieses Systems sind ein Sensor zum Erfassen der Bewegungsrichtung und der Lenkwinkelgeschwindigkeit eines sich bewegenden Körpers und ein Magnetfeldsensor, mit dem das Erdmagnetfeld gemessen wird. Aus den Meßwerten für das Erdmagnetfeld wird der absolute Kurs eines sich bewegenden Körpers bestimmt. Wenn der sich bewegende Körper magnetisiert ist, wird das Erdmagnetfeld überlagert und es treten Ausgangsfehler bei dem Magnetfeldsensor auf. Um einen solchen Fehler zu vermeiden, wird eine anfängliche Kalibrierung des Magnetfeldsensors durchgeführt. Bewegt sich aber der Körper durch Bereiche, die magnetische Störer enthalten, wie Eisenbahnüberquerungen, Eisenbahnunterführungen, unter der Erde verlegte Starkstromkabel, eisenbewehrte Betonmauern usw., wird der sich bewegende Körper starken magnetischen Störungen ausgesetzt, so daß sich die Magnetisierung des sich bewegenden Körpers ändert.

Wird andererseits der Sensor für die Lenkwinkelgeschwindigkeit zur Kursbestimmung des sich bewegenden Körpers verwendet, so ergeben sich ebenfalls Schwierigkeiten bezüglich der erwünschten Genauigkeit, wie es in der genannten US 5,235, 514 A näher angegeben ist.

Um diese Schwierigkeiten zu überwinden, schlägt die genannte US 5,235,514 A eine Vorrichtung zur Kurserfassung vor, die den aktuellen Kurs eines sich bewegenden Körpers genau abschätzen kann, indem einzeln die Fehlerfaktoren analysiert und bestimmt werden, die jeweils in den Kursdaten des Magnetsensors und in den Winkelgeschwindigkeitsdaten des Winkelgeschwindigkeitssensors enthalten sind. Ferner wird die Größe des Beitrages der jeweils momentanen Meßdaten des Winkelgeschwindigkeitssensors und des Magnetsensors zu den bereits erhaltenen Meßdaten bestimmt. Im Rahmen der Berechnungen werden Kalman-Filter zur Ermittlung von Erwartungswerten bzw. Schätzwerten für den voraussichtlichen Kurs des sich bewegenden Körpers verwendet.

In dem Konferenzbericht der Deutschen Gesellschaft für Ortung und Navigation e.V. über das Symposion "Land Vehicle Navigation" 1984 in Münster, BRD, wird in einem Beitrag von Rogge (Seiten 18.23 und 18.24) das Problem des Einflusses von starken Störern, wie Eisenbahnbrücken usw. auf das Erdmagnetfeld erörtert. Als eine Möglichkeit, solche Störungen zu unterdrücken, wird angegeben, zusätzlich zu einem Fluxgate einen einfachen, kurzfristig stabilen Sensor zu verwenden. Wenn zwischen den Meßergebnissen des Fluxgate und des zusätzlichen Sensors große Unterschiede auftreten, so soll man sich dann auf das Meßergebnis des zusätzlichen Sensors verlassen.

Eine andere Möglichkeit zur Störunterdrückung sieht gemäß diesem Konferenzbericht zwei voneinander beabstandete Fluxgates in einem Fahrzeug vor. Geht man davon aus, daß die Störquelle einen unterschiedlichen Einfluß auf die beiden Fluxgates hat, so kann durch Differenzbildung der Störvektor im wesentlichen eliminiert werden.

Eine weitere Möglichkeit zur Störunterdrückung geht von der Tatsache aus, daß die horizontale Komponente des ungestörten Erdmagnetfelds in hohem Maß konstant ist. Es ist dann plausibel, daß plötzliche Änderungen dieser Komponente darauf schließen lassen, daß das Erdmagnetfeld gestört ist. Solange die Störung anhält, werden die Winkelwerte nicht zur Kursbestimmung verwendet. Nach Beendigung wird eine Interpolation zwischen dem Kurswinkel vor der Störung und dem Kurswinkel danach durchgeführt. Dieses Vorgehen ist nicht genau. Bei Fahrten in Städten sollen die beiden Winkel im allgemeinen gleich groß sein.

In der **DE 40 03 563 C2** wird ein Verfahren zur Bestimmung der Fahrtrichtung eines Fahrzeugs mit einem geomagnetischen Sensor beschrieben. Der Sensor weist zwei Wicklungen auf, die einander rechtwinklig schneiden und in waagerechter Stellung auf einem ringförmigen Kern angeordnet sind. Wenn das Fahrzeug in dem homogenen Erdmagnetfeld eine vollständige Drehung ausführt und die von den Wicklungen des Sensors abgenommenen Meßdaten als Punkte in einem ebenen Koordinatensystem dargestellt werden, bildet die Gesamtheit der Meßpunkte einen als Meßwertekreis bezeichneten Kreis. Normalerweise wird während der Fahrt des Fahrzeugs die Fahrtrichtung durch die Richtung vom Nullpunkt des Meßwertekreises zum aktuellen Meßpunkt angegeben. Wenn jedoch der Fahrzeugaufbau infolge einer Störung des Erdmagnetfelds magnetisiert ist, so führt dies zu einer Veränderung oder Bewegung des Mittelpunkts des Meßwertekreises und somit zu einem Fehler bei der Richtungsmessung. Um diesen Fehler zu korrigieren, muß mit dem Fahrzeug erneut eine vollständige Drehung ausgeführt und der neue Mittelpunkt bestimmt werden. Um die Korrektur auch in einem ungünstigen magnetischen Umfeld genauer durchführen zu können, werden die im ungestörten und gestörten Umfeld erhaltenen Meßdaten einer Bewertung hinsichtlich ihrer Verläßlichkeit unterworfen, und bei der Neubestimmung des Mittelpunkts erfolgt eine Gewichtung des bisherigen Mittelpunkts und des aufgrund der neuen Daten bestimmten vorläufigen Mittelpunkts entsprechend der Verläßlichkeit der Daten.

In der **EP 0 226 653 A1** wird ein Verfahren zur Kurswinkelbestimmung mittels eines in einem Luftfahrzeug fest montierten Dreiachsen-Magnetometers beschrieben. Als Sensoren dienen wechselstromdurchflossene Spulen mit Eisenkern. Die aufgrund von magnetischen Störfeldern im Fahrzeug auftretenden Fehler in der Kursgenauigkeit werden durch eine automatische Kalibration kompensiert. Dazu wird ausgehend von einer im ungestörten Umfeld bestimmten Anfangsreferenzrichtung ein Kalibrationsflug durchgeführt, der bestimmte vorgegebene Flugmanöver enthält. Dabei werden laufend Abweichungen der momentanen Magnetfeldkomponenten von den Referenzkomponenten erfaßt und in eine Recheneinheit eingelesen. Diese bestimmt nach einer geeigneten Kalibrationsfunktion Korrekturkoeffizienten in Abhängikeit von den Lagewinkeln des Flugmanövers. Die Berechnungsformeln basieren auf den Formeln des diskreten Kalmanfilters, das besonders für rekursive Berechnungen geeignet ist. Nach jeder neuen Beobachtung der Abweichungen werden aus den vorhergehenden Koeffizienten neue Koeffizienten berechnet.

Aus der **EP 0 145 950 A1** ist ein Koppelnavigationsverfahren für Straßenfahrzeuge bekannt, bei dem der Erdmagnetfeldvektor mit zwei im Fahrzeug räumlich voneinander getrennt angeordneten Magnetfeldsonden gemessen und mit Störfeldvektoren, die getrennt für jede Sonde gespreichert sind, korrigiert. Über eine Vergleichseinrichtung werden die beiden Werte für den Erdfeldvektor verglichen. Stimmen die beiden Werte nicht überein, so werden die Störfeldvektoren unter Verwendung der letzten übereinstimmend ermittelten Erdfeldvektoren neu berechnet.

Der Erfindung liegt die Aufgabe zugrunde, ein Verfahren zur Stabilisierung der Richtungsanzeige von Magnetkompassen gegen nicht-permanente. äußere Störer anzugeben, das genauer arbeitet.

Diese Aufgabe wird durch die in den nebengeordneten Ansprüchen 1 bis 3 angegebenen Merkmalen gelöst.

Der Grundgedanke des Verfahrens nach der Erfindung soll im Zusammenhang mit dem Erdmagnetfeld beschrieben werden, wobei ergänzend ein einfaches konkretes Beispiel zur Erläuterung verwendet wird.

Erster Schritt:

In einem gegebenen Raumkoordinatensystem werden an einem Anfangsmeßpunkt, der innerhalb eines magnetisch ungestörten Gebietes liegt, aufeinanderfolgend mehrere Messungen, beispielsweise zehn, der Feldkomponenten des Feldvektors des Erdmagnetfeldes durchgeführt. Aus diesen gemessenen Feldkomponenten läßt sich eine Aussage über zeitliche Änderungen der Feldkomponenten gewinnen. Unter Berücksichtigung der zeitlichen Änderungen werden aus den gemessenen Feldkomponenten die Feldkomponenten eines Anfangsfeldvektors und der Absolutwert der Feldstärke aus dem Anfangsfeldvektorkomponenten berechnet.

Andere Möglichkeiten, einen Verlauf des Erdmagnetfeldes zu kennzeichnen, um Ausgangswerte zu erhalten, umfassen:

1) Messung des ortsabhängigen Feldgradienten (Messung an mehreren Orten);

2) Bestimmung der Feldcharakteristik durch Berechnung über ein mathematisches Modell unter Kenntnis der Position; bei ungefährer Kenntnis der Position auf der Erdoberfläche lassen sich Algorithmen angeben (beispielsweise bekannte wie GEOMAG; MAGVAR; IGRF), um die Feldcharakteristik des Erdmagnetfeldes zu berechnen. Die Geometrien künstlich erzeugter, quasi-statischer Leitfelder lassen sich mit Hilfe des Biot-Savart'schen Gesetzes oder auch direkt über die Maxwell-Gleichungen berechnen.

3) Bestimmung der Feldcharakteristik mit Hilfe des GPS Systems (GPS: Geophysical Positioning System; MAGVAR-Modell);

4) Bestimmung der Feldcharakteristik aus einer digitalen Karte;

5) Bestimmung der Feldcharakteristik durch andere zusätzliche Sensoren; beispielsweise kann der Abstand zu anderen Fahrzeugen mit optischen Abstandssensoren bestimmt und hieraus die Feldverzerrung zumindestens qualitativ bestimmt werden.

6) Festlegung der Magnetfeldcharakteristik durch Benutzereingaben (gestört/ungestört); letztendlich ist es möglich, durch Benutzereingaben (gestört/ungestört) offensichtlich magnetisch gestörte Umgebungen dem System in qualitativer Form mitzuteilen.

Als erster Schritt werden bei dem konkreten Beispiel aus den einzelnen Meßwerten der jeweiligen Feldkomponenten ihre Mittelwerte und ihre Streuung bestimmt. Der Wert der Streuung enthält eine Information über die Größe der zeitlichen Schwankungen der Feldkomponente am Anfangsmeßpunkt. denn je konstanter das Erdmagnetfeld ist, umso kleiner ist die Streuung der Feldkomponentenwerte. Aus den Mittelwerten der Feldkomponenten wird ein Anfangs-Absolutwert für die Feldstärke berechnet. Aus den einzelnen Meßwerten der Feldkomponenten wird für jede einzelne Messung der einzelne Absolutwert für die Feldstärke berechnet.

Zweiter Schritt:

Im allgemeinen Fall wird nun eine Gütefunktion bestimmt, um ein Maß für die Qualität, d.h. die Konstanz, des Feldvektors an dem Anfangsmeßpunkt zu erhalten.

Die Berechnung einer Gütefunktion kann in vielfältiger Weise erfolgen, wie durch

1) Verwendung von Kalman-Filtern
2) Verwendung von Maximum Likelihood Operatoren;
3) Anpassen einer empirisch ermittelten Verteilung;
4) Verwendung von Neuronalen Netzen;
5) Verwendung von Fuzzy Logik;
6) Verwendung von regelbasierten Systemen;
7) Verwendung von anderen Expertensystemen;

In dem beispielhaften konkreten Fall wird die Gütefunktion gewonnen, indem die Differenzen aus den einzelnen Absolutwerten der Feldstärke und dem Anfangs-Absolutwert der Feldstärke quadratisch addiert werden, die sich ergebende Summe durch die Anzahl der Messungen dividiert und das Inverse dieses Wertes als Gütefunktion genommen wird. In diesem Fall ist die Gütefunktion eine reine Zahl, d.h. ein Skalar. Je stärker die Feldkomponenten bei den Messungen schwankten, um so größer werden die einzelnen gebildeten Differenzen und um so kleiner wird der Wert der Gütefunktion.

Dritter Schritt:

Als nächstes wird für einen neuen Meßpunkt ein Schätzwert bzw. Erwartungswert für den Absolutwert der Feldstärke und/oder auch für die einzelnen Feldkomponenten an dem neuen Meßpunkt bestimmt. Es wird dabei von den einzelnen berechneten Absolutwerten der Feldstärke und/oder von den einzelnen gemessenen Feldkomponenten ausgegangen.

Ferner werden an dem neuen Meßpunkt ebenso wie am Anfangsmeßpunkt mehrere Messungen der Feldkomponenten des Feldvektors des Erdmagnetfeldes durchgeführt. Aus diesen gemessenen Feldkomponenten läßt sich wiederum eine Aussage über zeitliche Änderungen der Feldkomponenten gewinnen. Unter Berücksichtigung der zeitlichen Änderungen werden aus den gemessenen Feldkomponenten die Feldkomponenten eines neuen Feldvektors und der Absolutwert der Feldstärke aus den neuen Feldvektorkomponenten berechnet.

Die Abschätzung der wahren Zielwerte für die drei Feldkomponenten kann erfolgen durch:

1) Angabe des vorherigen Wertes, d.h. dieser wird als der wahre Zielwert genommen;

2) mathematische Extrapolation aus den Meßwerten der Vergangenheit;

3) KI-Verfahren;

Für den beispielhaften konkreten Fall werden bei diesem dritten Schritt an dem neuen Meßpunkt aus den einzelnen Meßwerten der jeweiligen Feldkomponenten ihre Mittelwerte und ihre Streuung bestimmt. Der Wert der Streuung enthält auch hier eine Information über die Größe der zeitlichen Schwankungen der Feldkomponenten an dem neuen Meßpunkt. Aus den Mittelwerten der Feldkomponenten wird ein Absolutwert für die Feldstärke an dem neuen Meßpunkt berechnet. Aus den Meßwerten der Feldkomponenten wird für jede einzelne Messung der einzelne Absolutwert für die Feldstärke berechnet.

Vierter Schritt:

Es wird auch hier auf der Grundlage der Messungen an dem neuen Meßpunkt ebenso wie an dem Anfangsmeßpunkt eine neue Gütefunktion bestimmt. Aus den beiden erhaltenen Gütefunktionen wird eine Gewichtsfunktion bestimmt, die in Abhängigkeit von der Form der Gütefunktionen ein Skalar oder eine Matrix sein kann.

Im konkreten beispielhaften Fall wird als Erwartungswert bzw. Schätzwert für den Feldvektor an dem neuen Meßpunkt der Feldvektor an dem Anfangsmeßpunkt angenommen. Letzterer war, wie oben angegeben, aus den Mittelwerten der dort gemessenen Feldkomponenten berechnet worden.

Auf der Grundlage der an dem neuem Meßpunkt einzeln gemessenen Feldkomponenten werden wiederum ihre Mittelwerte und ihre Streuung, und daraus der Absolutwert des Feldvektors an dem neuen Meßpunkt berechnet. Die neue Gütefunktion wird in der gleichen Weise wie vorhergehend beschrieben, nun aber von den neuen Meßwerten ausgehend berechnet.

Aus den beiden Gütefunktionen wird eine Gewichtsfunktion berechnet. Hierfür wird die neue Gütefunktion durch die Summe aus der vorherigen und der neuen Gütefunktion dividiert. Die Gewichtsfunktion ist hier ein Skalar.

Fünfter Schritt:

Die Komponenten des Feldvektors an dem neuen Meßpunkt werden mittels der Gewichtsfunktion mit den am Anfangsmeßpunkt erhaltenen Komponenten des Feldvektors gewichtet, wobei ein stabilisierter Feldvektor erhalten wird.

Im konkreten Beispiel werden die einzelnen Differenzen zwischen den jeweiligen Feldkomponenten des Feldvektors an dem neuen Meßpunkt und denjenigen an dem Anfangsmeßpunkt gebildet und mit der Gewichtsfunktion, die hier ein Skalar ist, multipliziert. Die dabei erhaltenen Werte werden zu den entsprechenden Feldkomponenten des Feldvektors am Anfangsmeßpunkt hinzuaddiert. Dadurch wird ein neuer Feldvektor gebildet, der als stabilisierter Feldvekor bezeichnet wird.

Dieser Rechenalgorithmus kann fortgesetzt werden, um an weiteren Meßpunkten stabilisierte Vektorkomponenten zu erhalten.

Man erkennt, daß für den Anfangsmeßpunkt und den weiteren Meßpunkt die gleichen Rechenoperationen mit den jeweiligen Meßwerten durchgeführt werden können, und dabei die Gütefunktionen erhalten werden. Die Gütefunktionen werden zu einer Gewichtsfunktion verknüpft, mit der bestimmt wird, in welchem Maß der an dem weiteren Meßpunkt bestimmte Feldvektor den Feldvektor des Anfangsmeßpunktes abändert, um den stabilisierten Feldvektor zu erhalten.

Beispiel 1

Zur weiteren Erklärung wird das vorstehend verwendete konkrete Beispiel mathematisch näher dargestellt.

Erster Schritt:

Es werden an einem stationären Anfangspunkt $P_a$ mit einem auf einem Fahrzeug angeordneten Magnetkompaß ab dem Zeitpunkt $t=t_1$ bis zu dem Zeitpunkt $t=t_{10}$ zehn Messungen der drei Feldkomponenten $B^1_{1+i}$, $B^2_{1+i}$, $B^3_{1+i}$ des Feldvektors $B_1$ durchgeführt.

Zweiter Schritt:

Da das Fahrzeug steht, werden die Messungen der Feldkomponenten im wesentlichen konstant sein. Die tatsächlichen Komponenten $B^1_1$, $B^2_1$, $B^3_1$ der Feldstärke $B_1$ werden durch Mittelwertbildung der Einzelwerte bestimmt:

$$B^m_1 = \frac{1}{10} \left( \sum_{i=1}^{10} B^m_{1+i} \right)$$

m = 1, .... 3, wobei m der Index der drei Komponenten ist Aus den berechneten Mittelwerten $B^1_1$, $B^2_1$, $B^3_1$ der Feldstärke $B_1$ wird der Absolutwert $| B_1 |$ berechnet:

$$|B_1| = [(B^1_1)^2 + (B^2_1)^2 + (B^3_1)^2]^{1/2}$$

Dritter Schritt:

Ausgehend von den zu den verschiedenen Meßzeiten gemessenen Einzelkomponenten des Magnetfeldes $B^1_i$, $B^2_i$, $B^3_i$ wird eine Gütefunktion $Q_1$, die durch die inverse Summe der Varianzen der Beträge der gemessenen Feldvektoren $| B_i |$ gegeben ist:

$$Q_1 = 1 / \left[ \frac{1}{10} \sum_{i=1}^{10} (| B_{1+i} | - | B_1 |)^2 \right]$$

mit

$$\left|B_{1+i}\right| = [(B^1_{1+i})^2 + (B^2_{1+i})^2 + (B^3_{1+i})^2]^{1/2}$$

Die Gütefunktion gibt ein Maß für die Feldqualität am Anfangspunkt an. Je größer die Schwankungen der Einzelwerte sind, um so kleiner ist der Wert von $Q_1$. Hier ist $Q_1$ eine skalare Größe. Für die Unschärfe ergibt sich $\pm 1/Q_1^{1/2}$.

Vierter Schritt:

Das Fahrzeug bewegt sich zu einem neuen Meßpunkt P, der zu einer Zeit $t_j$ erreicht wird. Anhand des berechneten Absolutwertes $|B_1|$ sowie der Gütefunktion $Q_1$ wird der Erwartungswert für den Absolutwert $|B_j|$ der Feldstärke $B_j$ am neuen Meßpunkt gleich dem Absolutwert des alten Wertes von $B_i$ gesetzt. d.h. $|B_j| = |B_1|$.

Fünfter Schritt:

An dem neuen Meßpunkt werden zu einem gegenüber den Zeitpunkten am Anfangspunkt späteren Zeitpunkt tj zehn Messungen für die drei Feldkomponenten durchgeführt. Die vorstehenden Schritte zwei bis vier werden entsprechend wiederholt, so daß man für den neuen Meßpunkt die drei Komponenten $B^1_j$, $B^2_j$, $B^3_j$, den Absolutwert $|B_j|$ und die Gütefunktion $Q_j$ erhält.

Sechster Schritt:

Als Funktion der berechneten Gütefunktion $Q_1$ und der Gütefunktion $Q_j$ wird eine Gewichtsfunktion bzw. Gewichtsmatrix bestimmt, wie folgt:

$$G_j = Q_j / (Q_1 + Q_j)$$

Siebenter Schritt:

Die Komponenten $B^1_j$, $B^2_j$, $B^3_j$ des Feldvektors $B_j$ werden durch die Gewichtsmatrix mit den am Anfangsmeßpunkt erhaltenen Komponenten $B^1_i$, $B^2_i$, $B^3_i$ der Feldstärke $B_i$ so gewichtet, daß ein stabilisierter Feldvektor $B^{stab}$ erhalten wird, der die Komponenten $B^{stab1}_j$, $B^{stab2}_j$, $B^{stab3}_j$ aufweist:

$$B^{stab1}_j = B^1_1 + G_j (B^1_j - B^1_1)$$

$$B^{stab2}_j = B^2_1 + G_j (B^2_j - B^2_1)$$

$$B^{stab3}_j = B^3_1 + G_j (B^3_j - B^3_1)$$

Dieser Rechenalgorithmus kann fortgesetzt werden, um an weiteren Meßpunkten stabilisierte Vektorkomponenten zu erhalten.

Beispiel 2

Nachfolgend wird als ein weiteres Beispiel des erfindungsgemäßen Verfahrens der Fall angegeben, bei dem die drei Komponenten des Erdmagnetfelds in einem kartesischen Koordinatensystem mit Hilfe zweier, digitaler Magnetkompasse als Sensoren gemessen werden. Die beiden Magnetkomoasse sind in einem Meßgebiet I an zwei verschiedenen Stellen $P^K$ (K = 1.2) eines Fahrzeuges angebracht.

Erster Schritt:

Es werden mit jedem Sensor stationär am Anfangspunkt ab dem Zeitpunkt $t=t_1$ bis zu dem Zeitpunkt $t=t_{10}$

zehn Messungen der drei Feldkomponenten $B^{11}_{1+i}$, $B^{21}_{1+i}$, $B^{31}_{1+i}$ an der Meßstelle $P^1$ und der drei Feldkomponenten $B^{12}_{1+i}$, $B^{22}_{1+i}$, $B^{32}_{1+i}$ an der Meßstelle $P^2$ des Feldvektors $B^1_1$ bzw. $B^2_1$ durchgeführt.

Zweiter Schritt:

Da das Fahrzeug steht, werden die Messungen der Feldkomponenten im Bereich des Anfangspunktes im wesentlichen konstant und unabhängig von der jeweiligen Meßstelle $P^K$ (K= 1,2) sein. Die tatsächlichen Komponenten $B^1_1$, $B^1_2$, $B^1_3$ der Feldstärke $B_1$ werden daher durch Mittelwertbildung der Einzelwerte bestimmt:

$$B^m_1 = \frac{1}{10} \left( \sum_{i=1}^{10} \frac{1}{2} \cdot (B^{m1}_{1+i} + B^{m2}_{1+i}) \right)$$

wobei m der Index der drei Komponenten ist.

Empirisch wurde festgestellt, daß die einzelnen Komponenten paarweise zwischen den beiden Sensoren einen konstanten Differenzbetrag aufweisen, der nur aufgrund des bei beiden Sensoren im allgemeinen etwas unterschiedlichen Rauschens der Sensoren variiert. Es ist daher gerechtfertigt, zwischen den beiden Sensoren zu Mitteln.

Aus den berechneten Mittelwerten $B^1_1$, $B^2_1$, $B^3_1$ der Feldstärke $B_1$ wird der Absolutwert $| B_1 |$ berechnet:

$$|B_1| = [(B^1_1)^2 + (B^2_1)^2 + (B^3_1)^2]^{1/2}$$

Dritter Schritt:

Mit Hilfe der an den beiden verschiedenen Meßstellen gemessenen einzelnen Feldkomponenten $B^{11}_{1+i}$, $B^{21}_{1+i}$, $B^{31}_{1+i}$, an der Meßstelle $P^1$ und der Feldkomponenten $B^{12}_{1+i}$, $B^{22}_{1+i}$, $B^{32}_{1+i}$ an der Meßstelle $P^2$ wird eine Gütefunktion $Q_1$ bestimmt, welche durch die Summe der quadratischen Abweichungen zwischen den paarweise mit dem Sensor 1 bzw. 2 gemessenen Komponenten bestimmt ist:

$$Q_1 = 1/\left[ \frac{1}{10} \sum_{i=1}^{10} \sum_{m=1}^{3} (B^{m1}_{1+i} - B^{m2}_{1+i})^2 \right]$$

Die Gütefunktion gibt ein Maß für die Homogenität und damit für die Qualität des gemessenen Feldvektors $B_1$ am Anfangspunkt an. Je größer die Unterschiede der gemessenen Einzelwerte sind, um so kleiner ist der Wert von $Q_1$. Hier ist $Q_1$ eine skalare Größe. Für die Unschärfe ergibt sich $\pm 1/Q_1^{1/2}$.

Vierter Schritt:

Das Fahrzeug bewegt sich in ein neues Meßgebiet II, das zu einer Zeit $t_j$ erreicht wird. Anhand des berechneten Absolutwertes $| B_1 |$ sowie der Gütefunktion $Q_1$ wird der Erwartungswert für den Absolutwert $| B_j |$ der Feldstärke $B_j$ im neuen Meßgebiet gleich dem Absolutwert des alten Wertes von $B_1$ gesetzt, d.h.

$$|B_j| = |B_1|.$$

Fünfter Schritt:

In dem neuen Meßgebiet II werden zu einem gegenüber den Zeitpunkten $t_i$ am Anfangspunkt späteren Zeitpunkt $t_j$ mit den beiden Sensoren jeweils zehn Messungen für die drei Feldkomponenten $B^{11}_{j+i}$, $B^{21}_{j+i}$, $B^{31}_{j+i}$ an der Meßstelle $P^1$ und der drei Feldkomponenten $B^{12}_{j+i}$, $B^{22}_{j+i}$, $B^{32}_{j+i}$ an der Meßstelle $P^2$ der zugehörigen Feldvektoren $B^1_j$ bzw. $B^2_j$ durchgeführt.

Die vorstehenden Schritte zwei bis vier werden entsprechend wiederholt, so daß man für den neuen Meßpunkt die drei Komponenten $B^1_j$, $B^2_j$, $B^3_j$, den Absolutwert $| B_j |$ und die Gütefunktion $Q_j$ erhält, nämlich:

$$B^m_j = \frac{1}{10} \left( \sum_{i=1}^{10} - \frac{1}{2} (B^{m1}_{j+i} + B^{m2}_{j+i}) \right)$$

wobei m der Index der drei Komponenten ist.

$$|B_j| = [(B^1_j)^2 + (B^2_j)^2 + (B^3_j)^2]^{1/2}$$

$$Q_j = 1/[\frac{1}{10} \sum_{i=1}^{10} \sum_{m=1}^{3} (B^{m1}_{j+i} - B^{m2}_{j+i})^2]$$

Durch die Gütefunktion $Q_n$ wird wiederum ein Maß für die Qualität des Feldvektors im neuen Meßgebiet erhalten.

Sechster Schritt:

Als Funktion der berechneten Gütefunktion $Q_1$ und der Gütefunktion $Q_j$ wird eine Gewichtsfunktion $G_j$ bestimmt, wie fogt:

$$G_j = Q_j / (Q_1 + Q_j)$$

Siebenter Schritt:

Die Komponenten $B^1_j$, $B^2_j$, $B^3_j$ des Feldvektors $B_j$ werden durch die Gewichtsmatrix Gj mit den im Meßgebiet erhaltenen Komponenten $B^1i$, $B^2_i$, $B^3_i$ der Feldstärke $B_i$ so gewichtet, daß ein stabilisierter Feldvektor $B^{stab}_j$ erhalten wird, der die Komponenten $B^{stab1}_j$, $B^{stab2}_j$, $B^{stab3}_j$ aufweist:

$$B^{stab1}_j = B^1_1 + G_j (B^1_j - B^1_1)$$

$$B^{stab2}_j = B^2_1 + G_j (B^2_j - B^2_1)$$

$$B^{stab3}_j = B^3_1 + G_j (B^3_j - B^3_1)$$

Dieser Rechenalgorithmus kann entsprechend für den weiteren Zeitverlauf $t_{i+j+p}$ und/oder in weiteren Meßgebieten fortgesetzt werden, um damit die jeweilige Gewichtsfunktion bzw. Gewichtsmatrix und die neuen stabilisierten Vektorkomponenten zu erhalten.

**Patentansprüche**

1.  Verfahren zum Stabilisieren der Richtungsanzeige von Magnetkompassen an sich in einem Magnetfeld, insbesondere dem Erdmagnetfeld oder einem erzeugten Leitfeld, bewegenden Körpern gegen hartmagnetische oder weichmagnetische Störer, bei dem

    a) in einem vorgegebenen Raumkoordinatensystem $R(x_1, x_2, x_3)$ innerhalb eines ersten Meßgebiets an mindestens einem Meßpunkt $P_a$, der sich in einem störungsfreien Gebiet des Magnetfeldes befindet, an aufeinanderfolgenden Zeitpunkten $t_i$ i Messungen ($i \geq 2$) der drei räumlichen Komponenten $B^1_{ai}$, $B^2_{ai}$, $B^3_{ai}$ des je-

weiligen Feldvektors $B_{ai}$ des Magnetfeldes durchgeführt werden,

b) aus den gemessenen Komponenten $B^1_{ai}$, $B^2_{ai}$, $B^3_{ai}$ des jeweiligen Magnetfeldvektors $B_{ai}$ unter Berücksichtigung der zeitlichen Änderungen der einzelnen gemessenen Komponenten die jeweiligen Komponenten $B^1_a$, $B^2_a$, $B^3_a$ und aus diesen der Absolutwert der Magnetfeldstärke $|B_a|$ an mindestens einem Meßpunkt $P_a$ berechnet werden,

c) aus den an dem mindestens einen Meßpunkt $P_a$ jeweils zu den Zeitpunkten t, gemessenen Komponenten $B^1_{ai}$, $B^2_{ai}$, $B^3_{ai}$ des Magnetfeldvektors für jede einzelne Messung der Absolutwert der Magnetfeldstärke $|B_{ai}|$ berechnet wird,

d) auf der Grundlage der berechneten Absolutwerte $|B_{ai}|$ und/oder der jeweiligen gemessenen Komponenten $B^1_{ai}$, $B^2_{ai}$, $B^3_{ai}$ des Magnetfeldvektors eine Gütefunktion $Q_i$ bestimmt wird, die ein Maß für die zeitliche Verteilung der zu den Zeitpunkten $t_i$ am Meßpunkt $P_a$ gemessenen Komponenten $B^1_{ai}$, $B^2_{ai}$, $B^3_{ai}$ des Magnetfeldvektors und ein Maß für die Qualität des Wertes der Magnetfeldstärke ist,

e) für einen weiteren Meßpunkt $P_b$, der in einem zweiten von dem ersten getrennten Meßgebiet liegt, und für einen gegenüber den Zeitpunkten $t_i$ späteren Zeitpunkt $t_j$ unter Berücksichtigung der zeitlichen Änderungen der einzelnen gemessenen Komponenten ein geschätzter Absolutwert $|B_{bj}|$ der Magnetfeldstärke und/oder geschätzte Komponenten $B^1_{bj}$, $B^2_{bj}$, $B^3_{bj}$ des Feldvektors an dem weiteren Meßpunkt $P_b$ auf der Grundlage des berechneten Absolutwertes $|B_{ai}|$ und/oder der jeweiligen in dem ersten Meßgebiet gemessenen Komponenten $B^1_{ai}$, $B^2_{ai}$, $B^3_{ai}$ des Magnetfeldvektors bestimmt werden,

f) zu einem späteren Zeitpunkt $t_k$ als die Zeitpunkte $t_i$ in dem zweiten Meßgebiet an dem weiteren Meßpunkt $P_b$ die Komponenten $B^1_{bk}$, $B^2_{bk}$, $B^3_{bk}$ des Magnetfeldvektors $B_k$ für einen Meßpunkt $P_b$ gemessen werden,

g) aus den an dem Meßpunkt $P_b$ jeweils zu den Zeitpunkten $t_k$ gemessenen Komponenten $B^1_{bk}$, $B^2_{bk}$, $B^3_{bk}$ des Magnetfeldvektors $B_k$ von jeder Messung der Absolutwert $|B_{bk}|$ der Magnetfeldstärke der einzelnen Messungen berechnet wird,

h) auf der Grundlage der berechneten Absolutwerte $|B_{bk}|$ und/oder der jeweiligen gemessenen Komponenten $B^1_{bk}$, $B^2_{bk}$, $B^3_{bk}$ des Magnetfeldvektors eine Gütefunktion $Q_k$ bestimmt wird, die ein Maß für die zeitliche Verteilung der zu den Zeitpunkten $t_k$ am Meßpunkt $P_b$ gemessenen Komponenten $B^1_{bk}$, $B^2_{bk}$, $B^3_{bk}$ des Magnetfeldvektors und ein maß für die Qualität des Wertes der Magnetfeldstärke ist,

i) als Funktion der Gütefunktion $Q_i$ zu den Zeiten $t_i$ am Meßpunkt $P_a$ und $Q_k$ zu den Zeiten $t_k$ am Meßpunkt $P_b$ eine Gewichtsfunktion oder Gewichtsmatrix $G_k$ bestimmt wird,

j) die Komponenten $B^1_{bk}$, $B^2_{bk}$, $B^3_{bk}$ des neuen Magnetfeldvektors $B_b$ mit der Gewichtsfunktion oder Gewichtsmatrix $G_k$ für die als Schätzung für das zweite Meßgebiet erhaltenen Komponenten $B^1_{bj}$, $B^2_{bj}$, $B^3_{bj}$ der Magnetfeldstärke so gewichtet werden, daß ein stabilisierter Magnetfeldvektor $B^{stab}$ mit den stabilisierten Komponenten $B^{stab1}_k$, $B^{stab2}_k$, $B^{stab3}_k$ erhalten wird,

k) die Schritte e) bis j), wenn erwünscht, für weitere Messungen zu nachfolgenden Zeitpunkten an weiteren Meßpunkten P und/oder weiteren Meßgebieten wiederholt werden und jeweils eine Gewichtsfunktion oder Gewichtsmatrix bestimmt wird, um die weiteren stabilisierten Komponenten zu gewinnen.

2. Verfahren zum Stabilisieren der Richtungsanzeige von Magnetkompassen an sich in einem Magnetfeld, insbesondere dem Erdmagnetfeld oder einem erzeugten Leitfeld, bewegenden Körpern gegen hartmagnetische oder weichmagnetische Störer, bei dem

a) in einem vorgegebenen Raumkoordinatensystem $R$ $(x_1, x_2, x_3)$ innerhalb eines ersten Meßgebiets I an einem Meßpunkt $P_l$, der sich in einem störungsfreien Gebiet des Magnetfeldes befindet, an aufeinanderfolgenden Zeitpunkten $t_i$ nl Messungen (nl $\geq$ 2) der drei räumlichen Komponenten $B^1_i$, $B^2_i$, $B^3_i$ des jeweiligen Feldvektors $B_i$ des Magnetfeldes durchgeführt werden,

b) aus den gemessenen Komponenten $B^1_i$, $B^2_i$, $B^3_i$ des jeweiligen Magnetfeldvektors $B_i$ die tatsächlichen Komponenten $B^1_1$, $B^2_1$, $B^3_1$ der Feldstärke $B_1$ durch Mittelwertbildung der Einzelwerte bestimmt werden:

$$B^m_1 \;=\; \frac{1}{nI} \left( \sum_{i=1}^{nI} B^m_{1+i} \right)$$

c) aus den berechneten Mittelwerten der Komponenten $B^1_1$, $B^2_1$, $B^3_1$ der Feldstärke $B_1$ der Absolutwert $|B_1|$ berechnet wird:

$$|B_1| = [(B^1_1)^2 + (B^2_1)^2 + (B^3_1)^2]^{1/2}$$

d) auf der Grundlage der jeweiligen gemessenen Einzelkomponenten $B^1_i$, $B^2_i$, $B^3_i$ des Magnetfeldvektors eine Gütefunktion $Q_1$ bestimmt wird, die durch die inverse Summe der Varianzen der Beträge der gemessenen Feldvektoren $|B_i|$ gegeben ist:

$$Q_1 \;=\; 1/ \left[ \frac{1}{nI} \sum_{i=1}^{nI} (|B_{1+i}| - |B_1|)^2 \right]$$

mit

$$|B_{1+i}| = [(B^1_{1+i})^2 + (B^2_{1+i})^2 + (B^3_{1+i})^2]^{1/2}$$

e) für einen neuen Meßpunkt $P_{II}$ in einem zweiten Meßgebiet II, das von dem ersten Meßgebiet getrennt ist, zu einem gegenüber den Zeitpunkten $t_i$ späteren Zeitpunkt $t_j$ der Erwartungswert für den Absolutwert $|B_j|$ der Feldstärke $B_j$ an dem neuen Meßpunkt gleich dem Absolutwert des alten Wertes $B_1$ gesetzt wird:

$$|B_j| = |B_1|$$

f) zu einem späteren Zeitpunkt $t_j$ als die Zeitpunkte $t_i$ in dem zweiten Meßgebiet II an dem neuen Meßpunkt $P_{II}$ die Komponenten $B^1_j$, $B^2_j$, $B^3_j$ des Magnetfeldvektors $B_j$ zu aufeinanderfolgenden Zeitpunkten $t_{j+k}$ nII (nII $\geq$ 2) Messungen durchgeführt werden,

g) aus den an dem Meßpunkt $P_{II}$ jeweils zu den Zeitpunkten $t_{j+k}$ gemessenen Komponenten $B^1_{j+k}$, $B^2_{j+k}$, $B^3_{j+k}$ des Magnetfeldvektors $B_j$ von jeder Messung der Absolutwert $|B_j|$ der Magnetfeldstärke $B_j$ der einzelnen Messungen berechnet wird und die Gütefunktion $Q_j$ erhaltenwird:

$$B^m_j \;=\; \frac{1}{nII} \sum_{k=1}^{nII} B^m_{j+k}$$

$$Q_j \;=\; 1/ \left[ \frac{1}{nII} \sum_{k=1}^{nII} (|B_{j+k}| - |B_j|)^2 \right]$$

mit

$$|B_j| = [(B^1_j)^2 + (B^2_j)^2 + (B^3_j)^2]^{1/2}$$

$$|B_{j+k}| = [(B^1_{j+k})^2 + (B^2_{j+k})^2 + (B^3_{j+k})^2]^{1/2}$$

h) als Funktion der Gütefunktion $Q_1$ zu den Zeiten $t_i$ am Meßpunkt $P_I$ und der Gütefunktion $Q_j$ zu den Zeiten $t_{j+k}$ am Meßpunkt $P_{II}$ eine Gewichtsfunktion $G_j$ bestimmt wird,

$$G_j = Q_j /(Q_1 + Q_j)$$

i) die Komponenten $B^1_j$, $B^2_j$, $B^3_j$ des neuen Magnetfeldvektors $B_j$ anhand der Gewichtsfunktion $G_j$ mit den im ersten Meßgebiet I erhaltenen Komponenten $B^1_i$, $B^2_i$, $B^3_i$ der Magnetfeldstärke so gewichtet werden, daß ein stabilisierter Magnetfeldvektor $B^{stab}$ mit den stabilisierten Komponenten $B^{stab1}_j$, $B^{stab2}_j$, $B^{stab3}_j$ erhalten wird,

$$B^{stab1}_j = B^1_1 + G_j (B^1_j - B^1_1)$$

$$B^{stab2}_j = B^2_1 + G_j (B^2_j - B^2_1)$$

$$B^{stab3}_j = B^3_1 + G_j (B^3_j - B^3_1)$$

k) die Schritte e) bis i), wenn erwünscht, für weitere Messungen zu nachfolgenden Zeitpunkten an weiteren Meßpunkten P und/oder in weiteren Meßgebieten wiederholt werden und jeweils eine Gewichtsfunktion bestimmt wird, um die weiteren stabilisierten Komponenten zu gewinnen.

3. Verfahren zum Stabilisieren der Richtungsanzeige von Magnetkompassen an sich in einem Magnetfeld, insbesondere dem Erdmagnetfeld oder einem erzeugten Leitfeld, bewegenden Körpern gegen hartmagnetische oder weichmagnetische Störer, bei dem

a) in einem vorgegebenen Raumkoordinatensystem R ($x_1$, $x_2$, $x_3$) innerhalb eines ersten Meßgebiets I an einem Meßort bei zwei verschiedenen Meßpunkten $P_{I1}$ und $P_{I2}$, die sich in einem störungsfreien Gebiet des Magnetfeldes befinden, zu aufeinanderfolgenden Zeitpunkten $t_i$ nI Messungen (nI $\geq$ 2) der drei Feldkomponenten $B^{11}_{1+i}$, $B^{21}_{1+i}$, $B^{31}_{1+i}$ des Feldvektors $B^1_1$ an dem Meßpunkt $P_{I1}$ und der drei Feldkomponenten $B^{12}_{1+i}$, $B^{22}_{1+i}$, $B^{32}_{1+i}$ des Feldvektors $B^2_1$ an dem Meßort $P_{I2}$ durchgeführt werden,

b) die tatsächlichen Komponenten $B^1_1$, $B^2_1$, $B^3_1$ der Feldstärke $B_1$ durch Mittelwertbildung der Einzelwerte bestimmt werden:

$$B^m_1 = \frac{1}{nI} \left( \sum_{i=1}^{nI} \frac{1}{2} (B^{m1}_{1+i} + B^{m2}_{1+i}) \right)$$

wobei m der Index der drei Komponenten ist,

c) aus den berechneten Mittelwerten $B^1_1$, $B^2_1$, $B^3_1$ der Feldstärke $B_1$ der Absolutwert $| B_1 |$ berechnet wird:

$$|B_1| = [(B^1_1)^2 + (B^2_1)^2 + (B^3_1)^2]^{1/2}$$

d) mit Hilfe der gemessenen einzelnen Feldkomponenten $B^{11}_{1+i}$, $B^{21}_{1+i}$, $B^{31}_{1+i}$ an dem Meßpunkt $P_{I1}$ und der Feldkomponenten $B^{12}_{1+i}$, $B^{22}_{1+i}$, $B^{32}_{1+i}$ an dem Meßpunkt $P_{I2}$ eine Gütefunktion $Q_1$ bestimmt wird, welche durch die Summe der quadratischen Abweichungen zwischen den paarweise an den Meßstellen gemessenen Komponenten bestimmt wird:

$$Q_1 \;=\; 1/ \left[ \frac{1}{nI} \sum_{i=1}^{nI} \sum_{m=1}^{3} (B^{m1}{}_{1+i} - B^{m2}{}_{1+i})^2 \right]$$

e) für einen zwei Meßpunkte $P_{II1}$, $P_{II2}$ umfassenden neuen Meßort in einem zweiten Meßgebiet II, das von dem ersten Meßgebiet I unterschiedlich ist, zu einem gegenüber den Zeitpunkten $t_i$ späteren Zeitpunkt $t_j$ der Erwartungswert für den Absolutwert $| B_j |$ der Feldstärke $B_j$ an dem neuen Meßort gleich dem Absolutwert des alten Wertes $B_1$ in dem ersten Meßgebiet I gesetzt wird,

$$|B_j| = |B_1|$$

f) an dem neuen Meßort in dem zweiten Meßgebiet II zu dem späteren Zeitpunkt $t_j$ an den zwei Meßpunkten $P_{II1}$, $P_{II2}$ des neuen Meßorts zu aufeinanderfolgenden Zeitpunkten $t_{j+k}$ nII Messungen (nII $\geq$ 2) für die drei Feldkomponenten $B^{11}{}_{j+k}$, $B^{21}{}_{j+k}$, $B^{31}{}_{j+k}$ des Feldvektors $B^1_j$ an der Meßstelle $P_{II1}$ und die drei Feldkomponenten $B^{12}{}_{j+k}$, $B^{22}{}_{j+k}$, $B^{32}{}_{j+k}$ des Feldvektors $B^2_j$ an der Meßstelle $P_{II2}$ durchgeführt werden, und die vorstehenden Schritte (b) bis (d) entsprechend wiederholt werden, so daß für den neuen Meßort die drei Komponenten $B^1_j$, $B^2_j$, $B^3_j$, der Absolutwert $| B_j |$ und die Gütefunktion $Q_j$ erhalten werden:

$$B^m{}_j \;=\; \frac{1}{nII} \left( \sum_{k=1}^{nII} \frac{1}{2} (B^{m1}{}_{j+k} + B^{m2}{}_{j+k}) \right)$$

wobei m der Index der drei Komponenten ist,

$$|B_j| = [(B^1_j)^2 + (B^2_j)^2 + (B^3_j)^2]^{1/2}$$

$$Q_j \;=\; 1/ \left[ \frac{1}{nII} \sum_{k=1}^{nII} \sum_{m=1}^{3} (B^{m1}{}_{j+k} - B^{m2}{}_{j+k})^2 \right]$$

g) als Funktion der berechneten Gütefunktion $Q_1$ und der Gütefunktion $Q_j$ eine Gewichtsfunktion $G_j$ bestimmt wird:

$$G_j = Q_j / (Q_1 + Q_j)$$

h) die Komponenten $B^1_j$, $B^2_j$, $B^3_j$ des Feldvektors $B_j$ mit der Gewichtsfunktion $G_j$ und mit den im Meßgebiet I erhaltenen Komponenten $B^1_i$, $B^2_i$, $B^3_i$ der Feldstärke $B_i$ so gewichtet werden, daß ein stabilisierter Feldvektor $B^{stab}$ erhalten wird. der die Komponenten $B^{stab1}_j$, $B^{stab2}_j$, $B^{stab3}_j$ aufweist:

$$B^{stab1}{}_j = B^1{}_1 + G_j (B^1{}_j - B^1{}_1)$$

$$B^{stab2}{}_j = B^2{}_1 + G_j (B^2{}_j - B^2{}_1)$$

$$B^{stab3}{}_j = B^3{}_1 + G_j (B^3{}_j - B^3{}_1)$$

i) die Schritte e) bis g), wenn erwünscht, für weitere Messungen zu nachfolgenden Zeitpunkten an weiteren Meßorten wiederholt werden und jeweils eine Gewichtsfunktion bestimmt wird, um die weiteren stabilisierten Komponenten zu gewinnen.

**Claims**

1. Method for stabilizing the directional display of magnetic compasses on bodies moving in a magnetic field, in particular the terrestrial magnetic field or a generated control field, against magnetically hard or magnetically soft interfering sources, in which

a) in a prescribed spatial coordinate system $R(x_1,x_2,x_3)$ within a first measurement region there are conducted at at least one measuring point $P_a$, which is located in an interference-free region of the magnetic field, at successive instants $t_i$ i measurements ($i \geq 2$) of the three spatial components $B^1_{ai}$, $B^2_{ai}$, $B^3_{ai}$ of the respective field vector $B_{ai}$ of the magnetic field,

b) taking account of the temporal changes in the individual measured components, the measured components $B^1_{ai}$, $B^2_{ai}$, $B^3_{ai}$ of the respective magnetic field vector $B_{ai}$ are used to calculate at at least one measuring point $B_a$ the respective components $B^1_a$, $B^2_a$, $B^3_a$ and from these the absolute value of the magnetic field strength $| B_a |$,

c) for each individual measurement the absolute value of the magnetic field strength $| B_{ai} |$ is calculated from the components $B^1_{ai}$, $B^2_{ai}$, $B^3_{ai}$, measured at the at least one measuring point $P_a$ at the instants $t_i$ respectively, of the magnetic field vector,

d) on the basis of the calculated absolute values $| B_{ai} |$ and/or the respective measured components $B^1_{ai}$, $B^2_{ai}$, $B^3_{ai}$ of the magnetic field vector a quality function Q; is determined which is a measure of the temporal distribution of the components $B^1_{ai}$, $B^2_{ai}$, $B^3_{ai}$, measured at the measuring point $P_a$ at the instants $t_i$, of the magnetic field vector and is a measure of the quality of the value of the magnetic field strength,

e) taking account of the temporal changes in the individual measured components, for a further measuring point $P_b$, which is situated in a second measurement region separate from the first, and for an instant $t_j$ later than the instants $t_i$ an estimated absolute value $|B_{bj}|$ of the magnetic field strength and/or estimated components $B^1_{bj}$, $B^2_{bj}$, $B^3_{bj}$ of the field vector are determined at the further measuring point $P_b$ on the basis of the calculated absolute value $|B_{ai}|$ and/or the respective components $B^1_{ai}$, $B^2_{ai}$, $B^3_{ai}$, measured in the first measurement region, of the magnetic field vector,

f) the components $B^1_{bk}$, $B^2_{bk}$, $B^3_{bk}$ of the magnetic field vector $B_k$ are measured for the measuring point $P_b$ at a later instant $t_k$ than the instants $t_i$ in the second measurement region at the further measuring point Pb,

g) the absolute value $|B_{bk}|$ of the magnetic field strength of the individual measurements is calculated from the components $B^1_{bk}$, $B^2_{bk}$, $B^3_{bk}$, measured at the measuring point $P_b$ at the instants $t_k$ in each case, of the magnetic field vector $B_k$ of each measurement,

h) there is determined on the basis of the calculated absolute values $|B_{bk}|$ and/or the respective measured components $B^1_{bk}$, $B^2_{bk}$, $B^3_{bk}$ of the magnetic field vector a quality function $Q_k$ which is a measure of the temporal distribution of the components $B^1_{bk}$, $B^2_{bk}$, $B^3_{bk}$, measured at the measuring point $P_b$ at the instants $t_k$, of the magnetic field vector and is a measure of the quality of the value of the magnetic field strength,

i) a weighting function or weighting matrix $G_k$ is determined as a function of the quality function $Q_i$ at the measuring point $P_a$ at the times $t_i$ and as a function of the quality function $Q_k$ at the measuring point $P_b$ at the times $t_k$,

j) the components $B^1_{bk}$, $B^2_{bk}$, $B^3_{bk}$ of the new magnetic field vector $B_b$ are weighted with the weighting function or weighting matrix $G_k$ for the components $B^1_{bj}$, $B^2_{bj}$, $B^3_{bj}$ obtained as an estimate for the second measurement region, of the magnetic field strength in such a way that a stabilized magnetic field vector $B^{stab}$ with the stabilized components $B^{stab1}_k$, $B^{stab2}_k$, $B^{stab3}_k$ is obtained,

k) if desired, the steps e) to j) are repeated for further measurements at subsequent instants at further measuring points P and/or in further measurement regions and in each case a weighting function or weighting matrix is determined in order to obtain the further stabilized components.

2. Method for stabilizing the directional display of magnetic compasses on bodies moving in a magnetic field, in particular the terrestrial magnetic field or a generated control field, against magnetically hard or magnetically soft interfering sources, in which

a) in a prescribed spatial coordinate system $R(x_1,x_2,x_3)$ within a first measurement region I there are conducted at one measuring point $P_l$, which is located in an interference-free region of the magnetic field, at successive instants $t_i$ nl measurements ($nl \geq 2$) of the three spatial components $B^1_i$, $B^2_i$, $B^3_i$ of the respective field vector

$B_i$ of the magnetic field,

b) the actual components $B^1_1$, $B^2_1$, $B^3_1$ of the field strength $B_1$ are determined from the measured components $B^1_i$, $B^2_i$, $B^3_i$ of the respective magnetic field vector $B_i$ by averaging the individual values:

$$B^m_1 = \frac{1}{nI} \left( \sum_{i=1}^{nI} B^m_{1+i} \right)$$

c) the absolute value $|B_1|$ is calculated from the calculated averages of the components $B^1_1$, $B^2_1$, $B^3_1$ of the field strength $B_1$:

$$|B_1| = [(B^1_1)^2 + (B^2_1)^2 + (B^2_1)^2 + (B^3_1)^2]^{1/2}$$

d) there is determined on the basis of the respective measured individual components $B^1_i$, $B^2_i$, $B^3_i$ of the magnetic field vector a quality function $Q_1$ which is given by the inverse sum of the variances of the absolute values of the measured field vectors $|B_i|$:

$$Q_1 = 1/\left[ \frac{1}{nI} \sum_{i=1}^{nI} (|B_{1+i}| - |B_1|)^2 \right]$$

where

$$|B_{1+i}| = [(B^1_{1+i})^2 + (B^2_{1+i})^2 + (B^3_{1+i})^2]^{1/2}$$

e) for a new measuring point $P_{II}$ in a second measurement region II, which is separate from the first measurement region, at an instant $t_j$ later than the instants $t_i$ the expected value for the absolute value $|B_j|$ of the field strength $B_j$ at the new measuring point is set equal to the absolute value of the old value $B_1$:

$$|B_j| = |B_1|$$

f) at a later instant $t_j$ than the instants $t_i$ at the new measuring point $P_{II}$ in the second measurement region II, nII (nII≥2) measurements are conducted for the components $B^1_j$, $B^2_j$, $B^3_j$ of the magnetic field vector $B_j$ at successive instants $t_{j+k}$,

g) the absolute value $|B_j|$ of the magnetic field strength $B_j$ of the individual measurements is calculated from the components $B^1_{j+k}$, $B^2_{j+k}$, $B^3_{j+k}$, measured at the measuring point $P_{II}$ at the instants $t_{j+k}$ in each case, of the magnetic field vector $B_j$ of each measurement and the quality function $Q_j$ is obtained:

$$B^m_j = \frac{1}{nII} \sum_{k=1}^{nII} B^m_{j+k}$$

$$Q_j = 1/\left[ \frac{1}{nII} \sum_{k=1}^{nII} (|B_{j+k}| - |B_j|)^2 \right]$$

$$|B_j| = [(B^1_j)^2 + (B^2_j)^2 + (B^3_j)^2]^{1/2}$$

where

$$|B_{j+k}| = [(B^1_{j+k})^2 + (B^2_{j+k})^2 + (B^3_{j+k})^2]^{1/2}$$

h) a weighting function $G_j$ is determined as a function of the quality function $Q_1$ at the measuring point $P_I$ at the times $t_i$ and as a function of the quality function $Q_j$ at the measuring point $P_{II}$ at the times $t_{j+k}$,

$$G_j = Q_j / (Q_1 + Q_j)$$

i) the components $B^1_j$, $B^2_j$, $B^3_j$ of the new magnetic field vector $B_j$ are weighted with the aid of the weighting function $G_j$ having the components $B^1_i$, $B^2_i$, $B^3_i$, obtained in the first measurement region I, of the magnetic field strength in such a way that a stabilized magnetic field vector $B^{stab}$ having the stabilized components $B^{stab1}_j$, $B^{stab2}_j$, $B^{stab3}_j$ is obtained,

$$B^{stab1}_j = B^1_1 + G_j (B^1_j - B^1_1)$$

$$B^{stab2}_j = B^2_1 + G_j (B^2_j - B^2_1)$$

$$B^{stab3}_j = B^3_1 + G_j (B^3_j - B^3_1)$$

k) if desired, the steps e) to i) are repeated for further measurements at subsequent instants at further measuring points P and/or in further measurement regions and in each case a weighting function is determined in order to obtain the further stabilized components.

3. Method for stabilizing the directional display of magnetic compasses on bodies moving in a magnetic field, in particular the terrestrial magnetic field or a generated control field, against magnetically hard or magnetically soft interfering sources, in which

a) in a prescribed spatial coordinate system $R(x_1, x_2, x_3)$ within a first measurement region I there are conducted at a measuring location at two different measuring points $P_{I1}$ and $P_{I2}$, which are located in an interference-free region of the magnetic field, at successive instants $t_i$ nl measurements ($nl \geq 2$) of the three field components $B^{11}_{1+i}$, $B^{21}_{1+i}$, $B^{31}_{1+i}$ of the field vector $B^1_1$ at the measuring point $P_{I1}$ and of the three field components $B^{12}_{1+i}$, $B^{22}_{1+i}$, $B^{32}_{1+i}$ of the field vector $B^2_1$ at the measuring location $P_{I2}$,
b) the actual components $B^1_1$, $B^2_1$, $B^3_1$ of the field strength $B_1$ are determined by averaging the individual values:

$$B^m_1 = \frac{1}{nl} \left( \sum_{i=1}^{nl} \frac{1}{2} (B^{m1}_{1+i} + B^{m2}_{1+i}) \right)$$

m being the index of the three components,
c) the absolute value $|B_1|$ is calculated from the calculated averages $B^1_1$, $B^2_1$, $B^3_1$ of the field strength $B_1$:

$$|B_1| = [(B^1_1)^2 + (B^2_1)^2 + (B^3_1)^2]^{1/2}$$

d) with the aid of the measured individual field components $B^{11}_{1+i}$, $B^{21}_{1+i}$, $B^{31}_{1+i}$ at the measuring point $P_{I1}$

and of the field components $B^{12}_{1+i}$, $B^{22}_{1+i}$, $B^{32}_{1+i}$ at the measuring point $P_{I2}$, a quality function $Q_1$ is determined which is determined by the sum of the quadratic deviations between the components measured in pairs at the measuring points:

$$Q_1 = 1/\left[\frac{1}{nI}\sum_{i=1}^{nI}\sum_{m=1}^{3}(B^{m1}_{1+i} - B^{m2}_{1+i})^2\right]$$

e) for a new measuring location, comprising two measuring points $P_{II1}$, $P_{II2}$, in a second measurement region II, which is different from the first measurement region I, at an instant $t_j$ later than the instants $t_i$ the expected value for the absolute value $|B_j|$ of the field strength $B_j$ at the new measuring location is set equal to the absolute value of the old value $B_1$ in the first measuring region I,

$$|B_j| = |B_1|$$

f) at the new measuring location in the second measurement region II at the later instant $t_j$ there are conducted at the two measuring points $P_{II1}$, $P_{II2}$ of the new measuring location at successive instants $t_{j+k}$ nII measurements ($nII \geq 2$) for the three field components $B^{11}_{j+k}$, $B^{21}_{j+k}$, $B^{31}_{j+k}$ of the field vector $B^1_j$ at the measuring point $P_{II1}$ and the three field components $B^{12}_{j+k}$, $B^{22}_{j+k}$, $B^{32}_{j+k}$ of the field vector $B^2_j$ at the measuring point $P_{II2}$, and the above steps b) to d) are correspondingly repeated, with the result that the three components $B^1_j$, $B^2_j$, $B^3_j$, the absolute value $|B_j|$ and the quality function $Q_j$ are obtained for the new measuring location:

$$B^m_j = \frac{1}{nII}\left(\sum_{k=1}^{nII}\frac{1}{2}(B^{m1}_{j+k} + B^{m2}_{j+k})\right)$$

m being the index of the three components,

$$|B_j| = [(B^1_j)^2 + (B^2_j)^2 + (B^3_j)^2]^{1/2},$$

$$Q_j = 1/\left[\frac{1}{nII}\sum_{k=1}^{nII}\sum_{m=1}^{3}(B^{m1}_{j+k} - B^{m2}_{j+k})^2\right]$$

g) a weighting function $G_j$ is determined as a function of the calculated quality function $Q_1$ and the quality function $Q_j$:

$$G_j = Q_j / (Q_1 + Q_j)$$

h) the components $B^1_j$, $B^2_j$, $B^3_j$ of the field vector $B_j$ are weighted with the weighting function $G_j$ and with the components $B^1_i$, $B^2_i$, $B^3_i$, obtained in the measurement region I, of the field strength $B_i$ in such a way that a stabilized field vector $B^{stab}$ is obtained which has the components $B^{stab1}_j$, $B^{stab2}_j$, $B^{stab3}_j$:

$$B^{stab1}_j = B^1_1 + G_j (B^1_j - B^1_1)$$

$$B^{stab2}_j = B^2_1 + G_j (B^2_j - B^2_1)$$

$$B^{stab3}_{j} = B^{3}_{1} + G_{j} (B^{3}_{j} - B^{3}_{1})$$

i) if desired, the steps e) to g) are repeated for further measurements at subsequent instants at further measuring locations, and a weighting function is determined in each case in order to obtain the further stabilized components.

**Revendications**

1. Procédé pour la stabilisation de la direction indiquée par des compas magnétiques montés sur des corps se déplaçant dans un champ magnétique, en particulier le champ magnétique terrestre ou un champ de guidage créé, vis-à-vis de perturbations magnétiques fortes ou faibles, dans lequel

a) dans un système prédéterminé de coordonnées spatiales $R(x_1, x_2, x_3)$, on effectue, à l'intérieur d'un premier domaine de mesure, en au moins un point de mesure $P_a$ qui se trouve dans un domaine non perturbé du champ magnétique, à des instants successifs $t_i$, i mesures ($i \geq 2$) des trois composantes spatiales $B^1_{ai}$, $B^2_{ai}$, $B^3_{ai}$ du vecteur de champ respectif $B_{ai}$ du champ magnétique,

b) à partir des composantes mesurées $B^1_{ai}$, $B^2_{ai}$, $B^3_{ai}$ du vecteur de champ magnétique respectif $B_{ai}$ et en tenant compte des variations temporelles des composantes individuelles mesurées, on calcule les composantes respectives $B^1_a$, $B^2_a$, $B^3_a$ et à partir de celles-ci la valeur absolue de l'intensité de champ magnétique $|B_a|$ en au moins un point de mesure $P_a$,

c) à partir des composantes $B^1_{ai}$, $B^2_{ai}$, $B^3_{ai}$ du vecteur de champ magnétique mesurées en cet au moins un point de mesure $P_a$ respectivement aux instants $t_i$, on calcule pour chaque mesure individuelle la valeur absolue de l'intensité de champ magnétique $|B_{ai}|$,

d) sur la base des valeurs absolues calculées $|B_{ai}|$ et/ou des composantes mesurées respectives $B^1_{ai}$, $B^2_{ai}$, $B^3_{ai}$ du vecteur de champ magnétique, on détermine une fonction de qualité $Q_i$, qui constitue une mesure de la répartition temporelle des composantes $B^1_{ai}$, $B^2_{ai}$, $B^3_{ai}$ du vecteur de champ magnétique mesurées au point de mesure $P_a$ aux instants $t_i$ et une mesure de la qualité de la valeur de l'intensité de champ magnétique,

e) pour un autre point de mesure $P_b$ qui se trouve dans un second domaine de mesure distinct du premier, et pour un instant $t_j$ postérieur par rapport aux instants $t_i$, en tenant compte des variations temporelles des composantes individuelles mesurées, on détermine une valeur absolue estimée $|B_{bj}|$ de l'intensité de champ magnétique et/ou des composantes estimées $B^1_{bj}$, $B^2_{bj}$, $B^3_{bj}$ du vecteur de champ à l'autre point de mesure $P_b$ sur la base de la valeur absolue calculée $|B_{ai}|$ et/ou des composantes respectives $B^1_{ai}$, $B^2_{ai}$, $B^3_{ai}$ du vecteur de champ magnétique mesurées dans le premier domaine de mesure,

f) à un instant $t_k$ postérieur aux instants $t_j$, on mesure, à l'autre point de mesure $P_b$ dans le second domaine de mesure, les composantes $B^1_{bk}$, $B^2_{bk}$, $B^3_{bk}$ du vecteur de champ magnétique $B_k$ pour un point de mesure $P_b$,

g) à partir des composantes $B^1_{bk}$, $B^2_{bk}$, $B^3_{bk}$ du vecteur de champ magnétique $B_k$ mesurées au point de mesure $P_b$ respectivement aux instants $t_k$, on calcule, à partir de chaque mesure, la valeur absolue $|B_{bk}|$ de l'intensité de champ magnétique des mesures individuelles,

h) sur la base des valeurs absolues calculées $|B_{bk}|$ et/ou des composantes mesurées respectives $B^1_{bk}$, $B^2_{bk}$, $B^3_{bk}$ du vecteur de champ magnétique, on détermine une fonction de qualité $Q_k$, qui constitue une mesure de la répartition temporelle des composantes $B^1_{bk}$, $B^2_{bk}$, $B^3_{bk}$ du vecteur de champ magnétique mesurées au point de mesure $P_b$ aux instants $t_k$ et une mesure de la qualité de la valeur de l'intensité de champ magnétique,

i) en fonction de la fonction de qualité $Q_i$ aux instants $t_i$ au point de mesure $P_a$ et $Q_k$ aux instants $t_k$ au point de mesure $P_b$, on détermine une fonction de pondération ou une matrice de pondération $G_k$,

j) les composantes $B^1_{bk}$, $B^2_{bk}$, $B^3_{bk}$ du nouveau vecteur de champ magnétique $B_b$ sont pondérées avec la fonction de pondération ou la matrice de pondération $G_k$ pour les composantes $B^1_{bj}$, $B^2_{bj}$, $B^3_{bj}$ de l'intensité de champ magnétique obtenues comme estimation pour le second domaine de mesure, d'une façon telle que l'on obtienne un vecteur de champ magnétique stabilisé $B^{stab}$ avec les composantes stabilisées $B^{stab1}_k$, $B^{stab2}_k$, $B^{stab3}_k$,

k) si on le souhaite, on répète les opérations e) à j) pour d'autres mesures à des instants ultérieurs en d'autres points de mesure P et/ou dans d'autres domaines de mesure, et on détermine chaque fois une fonction de pondération ou une matrice de pondération en vue d'obtenir les autres composantes stabilisées.

**2.** Procédé pour la stabilisation de la direction indiquée par des compas magnétiques montés sur des corps se déplaçant dans un champ magnétique, en particulier le champ magnétique terrestre ou un champ de guidage créé, vis-à-vis de perturbations magnétiques fortes ou faibles, dans lequel

a) dans un système prédéterminé de coordonnées spatiales $R(x_1, x_2, x_3)$, on effectue, à l'intérieur d'un premier domaine de mesure I, en un point de mesure $P_I$ qui se trouve dans un domaine non perturbé du champ magnétique, à des instants successifs $t_i$, nI mesures (nI $\geq$ 2) des trois composantes spatiales $B^1_i$, $B^2_i$, $B^3_i$ du vecteur de champ respectif $B_i$ du champ magnétique,

b) à partir des composantes mesurées $B^1_i$, $B^2_i$, $B^3_i$ du vecteur de champ magnétique respectif $B_i$, on détermine les composantes effectives $B^1_1$, $B^2_1$, $B^3_1$ de l'intensité de champ $B_1$ en formant la valeur moyenne des valeurs individuelles:

$$B^m_1 = \frac{1}{nI} \left( \sum_{i=1}^{nI} B^m_{1+i} \right)$$

c) à partir des valeurs moyennes calculées des composantes $B^1_1$, $B^2_1$, $B^3_1$ de l'intensité de champ $B_1$, on calcule la valeur absolue $|B_1|$ :

$$|B_1| = [(B^1_1)^2 + (B^2_1)^2 + (B^3_1)^2]^{1/2}$$

d) sur la base des composantes individuelles mesurées respectives $B^1_i$, $B^2_i$, $B^3_i$ du vecteur de champ magnétique, on détermine une fonction de qualité $Q_1$, qui est donnée par l'inverse de la somme des variances des valeurs des vecteurs de champ mesurés $|B_i|$:

$$Q_1 = 1/ \left[ \frac{1}{nI} \sum_{i=1}^{nI} (|B_{1+i}| - |B_1|)^2 \right]$$

avec

$$|B_{1+i}| = [(B^1_{1+i})^2 + (B^2_{1+i})^2 + (B^3_{1+i})^2]^{1/2}$$

e) pour un nouveau point de mesure $P_{II}$ dans un second domaine de mesure II, qui est distinct du premier domaine de mesure, à un instant $t_j$ postérieur par rapport aux instants $t_i$, la valeur escomptée pour la valeur absolue $|B_j|$ de l'intensité de champ $B_j$ au nouveau point de mesure est posée égale à la valeur absolue de l'ancienne valeur $B_1$ :

$$|B_j| = |B_1|$$

f) à un instant $t_j$ postérieur aux instants $t_i$ dans le second domaine de mesure II au nouveau point de mesure $P_{II}$, on effectue nII mesures (nII $\geq$ 2) pour les composantes $B^1_j$, $B^2_j$, $B^3_j$ du vecteur de champ magnétique $B_j$ à des instants successifs $t_{j+k}$,

g) à partir des composantes $B^1_{j+k}$, $B^2_{j+k}$, $B^3_{j+k}$ du vecteur de champ magnétique $B_j$ mesurées au point de mesure $P_{II}$ respectivement aux instants $t_{j+k}$, on calcule, à partir de chaque mesure, la valeur absolue $|B_j|$ de l'intensité de champ magnétique $B_j$ des mesures individuelles et on obtient la fonction de qualité $Q_j$ :

$$B^m_j = \frac{1}{nII} \sum_{k=1}^{nII} B^m_{j+k}$$

$$Q_j = 1/\left[\frac{1}{nII} \sum_{k=1}^{nII} (|B_{j+k}| - |B_j|)^2\right]$$

avec

$$|B_j| = [(B^1_j)^2 + (B^2_j)^2 + (B^3_j)^2]^{1/2}$$

$$|B_{j+k}| = [(B^1_{j+k})^2 + (B^2_{j+k})^2 + (B^3_{j+k})^2]^{1/2}$$

h) en fonction de la fonction de qualité $Q_1$ aux instants $t_i$ au point de mesure $P_I$ et de la fonction de qualité $Q_j$ aux instants $t_{j+k}$ au point de mesure $P_{II}$, on détermine une fonction de pondération $G_j$

$$G_j = Q_j / (Q_1 + Q_j)$$

i) les composantes $B^1_j$, $B^2_j$, $B^3_j$ du nouveau vecteur de champ magnétique $B_j$ sont pondérées au moyen de la fonction de pondération $G_j$ avec les composantes $B^1_i$, $B^2_i$, $B^3_i$ de l'intensité de champ magnétique obtenues dans le premier domaine de mesure I, d'une façon telle que l'on obtienne un vecteur de champ magnétique stabilisé $B^{stab}$ avec les composantes stabilisées $B^{stab1}_j$, $B^{stab2}_j$, $B^{stab3}_j$,

$$B^{stab1}_j = B^1_1 + G_j (B^1_j - B^1_1)$$

$$B^{stab2}_j = B^2_1 + G_j (B^2_j - B^2_1)$$

$$B^{stab3}_j = B^3_1 + G_j (B^3_j - B^3_1)$$

k) si on le souhaite, on répète les opérations e) à i) pour d'autres mesures à des instants ultérieurs en d'autres points de mesure P et/ou dans d'autres domaines de mesure, et on détermine chaque fois une fonction de pondération, en vue d'obtenir les autres composantes stabilisées.

3. Procédé pour la stabilisation de la direction indiquée par des compas magnétiques montés sur des corps se déplaçant dans un champ magnétique, en particulier le champ magnétique terrestre ou un champ de guidage créé, vis-à-vis de perturbations magnétiques fortes ou faibles, dans lequel

a) dans un système prédéterminé de coordonnées spatiales $R(x_1, x_2, x_3)$, on effectue, à l'intérieur d'un premier domaine de mesure I, dans une zone de mesure en deux points de mesure différents $P_{I1}$ et $P_{I2}$ qui se trouvent dans un domaine non perturbé du champ magnétique, à des instants successifs $t_i$, $nl$ mesures ($nl \geq 2$) des trois composantes de champ $B^{11}_{1+i}$, $B^{21}_{1+i}$, $B^{31}_{1+i}$ du vecteur de champ $B^1_1$ au point de mesure $P_{I1}$ et des trois composantes de champ $B^{12}_{1+i}$, $B^{22}_{1+i}$, $B^{32}_{1+i}$ du vecteur de champ $B^2_1$ au point de mesure $P_{I2}$,

b) on détermine les composantes effectives $B^1_1$, $B^2_1$, $B^3_1$ de l'intensité de champ $B_1$ en formant la valeur moyenne des valeurs individuelles:

$$B^m_1 = \frac{1}{nI} \left( \sum_{i=1}^{nI} \frac{1}{2} (B^{m1}_{1+i} + B^{m2}_{1+i}) \right)$$

dans laquelle m est l'indice des trois composantes,

c) à partir des valeurs moyennes calculées $B^1_1$, $B^2_1$, $B^3_1$ de l'intensité de champ $B_1$, on calcule la valeur absolue $|B_1|$ :

$$|B_1| = [(B^1_1)^2 + (B^2_1)^2 + (B^3_1)^2]^{1/2}$$

d) à l'aide des composantes individuelles de champ mesurées $B^{11}_{1+i}$, $B^{21}_{1+i}$, $B^{31}_{1+i}$ au point de mesure $P_{I1}$ et des composantes de champ $B^{12}_{1+i}$, $B^{22}_{1+i}$, $B^{32}_{1+i}$ au point de mesure $P_{I2}$, on détermine une fonction de qualité $Q_1$, qui est déterminée par la somme des écarts quadratiques entre les composantes mesurées par paires aux endroits de mesure:

$$Q_1 = 1/ \left[ \frac{1}{nI} \sum_{i=1}^{nI} \sum_{m=1}^{3} (B^{m1}_{1+i} - B^{m2}_{1+i})^2 \right]$$

e) pour une nouvelle zone de mesure comprenant deux points de mesure $P_{II1}$, $P_{II2}$ dans un second domaine de mesure II, qui est différent du premier domaine de mesure I, à un instant $t_j$ postérieur par rapport aux instants $t_i$, la valeur escomptée pour la valeur absolue $|B_j|$ de l'intensité de champ $B_j$ dans la nouvelle zone de mesure est posée égale à la valeur absolue de l'ancienne valeur $B_1$ dans le premier domaine de mesure I :

$$|B_j| = |B_1|$$

f) dans la nouvelle zone de mesure dans le second domaine de mesure II, à l'instant postérieur $t_j$ aux deux points de mesure $P_{II1}$, $P_{II2}$ de la nouvelle zone de mesure à des instants successifs $t_{j+k}$, on effectue nII mesures (nII $\geq$ 2) pour les trois composantes de champ $B^{11}_{j+k}$, $B^{21}_{j+k}$, $B^{31}_{j+k}$ du vecteur de champ $B^1_j$ au point de mesure $P_{II1}$ et les trois composantes de champ $B^{12}_{j+k}$, $B^{22}_{j+k}$, $B^{32}_{j+k}$ du vecteur de champ $B^2_j$ au point de mesure $P_{II2}$, et on répète les opérations précédentes (b) à (d) de façon correspondante, de manière à obtenir pour la nouvelle zone de mesure les trois composantes $B^1_j$, $B^2_j$, $B^3_j$, la valeur absolue $|B_j|$ et la fonction de qualité $Q_j$ :

$$B^m_j = \frac{1}{nII} \left( \sum_{k=1}^{nII} \frac{1}{2} (B^{m1}_{j+k} + B^{m2}_{j+k}) \right)$$

dans laquelle m est l'indice des trois composantes,

$$|B_j| = [(B^1_j)^2 + (B^2_j)^2 + (B^3_j)^2]^{1/2}$$

g) en fonction de la fonction de qualité calculée $Q_1$ et de la fonction de qualité $Q_j$, on détermine une fonction de pondération $G_j$ :

$$G_j = Q_j / (Q_1 + Q_j)$$

h) les composantes $B^1_j$, $B^2_j$, $B^3_j$ du vecteur de champ $B_j$ sont pondérées au moyen de la fonction de pondération $G_j$ et avec les composantes $B^1_i$, $B^2_i$, $B^3_i$ de l'intensité de champ $B_i$ obtenues dans le domaine de mesure I, d'une façon telle que l'on obtienne un vecteur de champ stabilisé $B^{stab}$, qui présente les composantes $B^{stab1}_j$, $B^{stab2}_j$, $B^{stab3}_j$,

$$B^{stab1}_j = B^1_1 + G_j \, (B^1_j - B^1_1)$$

$$B^{stab2}_j = B^2_1 + G_j \, (B^2_j - B^2_1)$$

$$B^{stab3}_j = B^3_1 + G_j \, (B^3_j - B^3_1)$$

i) si on le souhaite, on répète les opérations e) à g) pour d'autres mesures à des instants ultérieurs dans d'autres zones de mesure P et on détermine chaque fois une fonction de pondération, en vue d'obtenir les autres composantes stabilisées.